# EUROPÄISCHE PATENTSCHRIFT

(11) **EP 2 277 732 B1**
(45) Veröffentlichungstag und Bekanntmachung des Hinweises auf die Patenterteilung: **19.10.2011**
(21) Anmeldenummer: 10167442.2
(22) Anmeldetag: 28.06.2010
(51) Int. Cl.: B60K 17/344, F16D 3/22

(54) **Getriebe, insbesondere Verteilergetriebe**
Gear, in particular distributer gear
Transmission, notamment engrenage de répartiteur

(30) Priorität: 25.07.2009 DE 102009034793
(43) Veröffentlichungstag der Anmeldung: 26.01.2011
(73) Patentinhaber: Bayerische Motoren Werke Aktiengesellschaft, 80809 München (DE)
(72) Erfinder: Ohnemus, Ulrich, 82285, Hattenhofen (DE)

(56) Entgegenhaltungen:
- DE-A1- 4 103 560
- DE-A1- 19 919 964
- US-A1- 2006 258 501

## Beschreibung

Die vorliegende Erfindung betrifft ein Getriebe, insbesondere ein Verteiler-getriebe gemäß dem Oberbegriff des Patentanspruches 1.

Ein gattungsgemäßes Getriebe ist aus der DE 199 19 964 A1 bekannt.

Zum relevaten Stand des Technik der vorliegenden Erfindung zähler ferner die US 2006/0258501 A1 sowie die DE 41 03 560 A1.

Bei Fahrzeugen mit Allradantrieb ist am Ausgang des Grundgetriebes ein Verteilergetriebe angeordnet. Eine erste Gelenkwelle führt vom Ausgang des Grundgetriebes zum Hinterachsgetriebe. Über das Verteilergetriebe kann ein Teildrehmoment "abgezweigt" werden, das über eine am Grundgetriebe seitlich vorbei nach vorne laufende Gelenkwelle zu einem Vorderachsgetriebe geleitet wird.

Aus dem Stand der Technik bekannt sind Verteilergetriebe, bei denen die zur Vorderachse führende Gelenkwelle über eine Zahnradstufe vom Grundgetriebe angetrieben wird. Alternativ dazu gibt es auch Konzepte, bei denen die zur Vorderachse führende Gelenkwelle über einen Kettentrieb angetrieben wird. Ein Kettentrieb ist in der Regel platzsparender, kostengünstiger und mit einem höheren Wirkungsgrad verbunden.

Aufgrund diverser geometrischer Randbedingungen ist die zur Vorderachse führende Gelenkwelle in der Regel nicht parallel zur Längsrichtung des Hauptantriebsstrangs, d. h. zur Längsrichtung der zur Hinterachse führenden Gelenkwelle angeordnet, sondern leicht schräg. Je kürzer der Abstand zwischen dem Verteilergetriebe und dem Vorderachsdifferential ist, desto größer ist in der Regel der Schrägstellungswinkel der zur Vorderachse führenden Gelenkwelle. Bei aus dem Stand der Technik bekannten Konzepten ist am vorderen und am hinteren Ende der zur Vorderachse führenden Gelenkwelle häufig ein Kardankreuzgelenk angeordnet. Die Dauerbeugewinkel von Kardankreuzgelenken sind jedoch eng begrenzt. Im Übrigen müssen derartige Gelenke in der Regel in Z-Anordnung angeordnet werden.

Die zur Vorderachse führende Gelenkwelle muss üblicherweise im "Mitteltunnel" der Fahrzeugbodengruppe untergebracht werden. Da es bei zahlreichen Fahrzeugmodellen häufig eine Variante mit Heckantrieb und eine Variante mit Allradantrieb gibt, ist man bestrebt, für beide Varianten möglichst dieselbe Bodengruppe zu verwenden. Von Vorteil ist es, wenn die zur Vorderachse führende Gelenkwelle einen möglichst geringen Schrägungswinkel in Bezug auf die Längsachse des Fahrzeugs aufweist und wenn die zur Vorderachse führende Gelenkwelle möglichst nahe seitlich am Grundgetriebe entlang verlaufend angeordnet ist.

Bei herkömmlichen Konzepten wird mittels eines Verteilergetriebes ein Teilmoment zum Antrieb der Vorderachse aus dem Grundgetriebe abgezweigt, wobei vorderhalb des Verteilergetriebes ein erstes Gelenk angeordnet ist, welches mit dem hinteren Ende der zur Vorderachse führenden Gelenkwelle verbunden ist. Das vordere Ende der Gelenkwelle ist wiederum über ein weiteres Gelenk mit dem Eingang des Vorderachsdifferentials verbunden. Bei einer derartigen Anordnung ist die Gelenkwelle relativ kurz, was insbesondere bei kleinen Abständen zwischen der Vorderachse und dem Verteilergetriebe zu relativ großen Schrägstellungswinkeln der Gelenkwelle in Bezug auf die Längsachse des Fahrzeugs führt.

Aufgabe der Erfindung ist es, ein Getriebe, insbesondere ein Verteilergetriebe zu schaffen, welches es ermöglicht, die seitlich am Grundgetriebe vorbeilaufenden Gelenkwelle möglichst nahe und möglichst parallel bzw. mit nur geringer Schrägstellung in Bezug auf die Längsachse des Fahrzeugs anzuordnen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Getriebe, insbesondere ein Verteilergetriebe mit einem "Abtriebsrad", das über ein Gelenk mit einer Abtriebswelle verbunden ist.

Der Kern der Erfindung besteht darin, das Gelenk zumindest teilweise in das Abtriebsrad zu integrieren. Bei vorgegebenem Abstand zwischen dem Verteilergetriebe und einem anzutreibenden Achsdifferential kann hierdurch die Länge der Gelenkwelle maximiert werden. Der Schrägstellungswinkel der Gelenkwelle in Bezug auf die Längsachse des Fahrzeugs lässt sich dementsprechend minimieren.

Nach einer Weiterbildung der Erfindung ist ein Außenteil, insbesondere ein Außenring des Gelenks in das Abtriebsrad eingesetzt. Das Außenteil bzw. der Außenring kann in Umfangsrichtung betrachtet formschlüssig mit dem Abtriebsrad gekoppelt sein.

Für einen Längenausgleich zwischen der Vorderachse und dem Achsgetriebe kann ein Ende der Abtriebswelle über eine Längsverzahnung verschieblich mit einem Innenteil, insbesondere einem Innenring des Gelenks gekoppelt sein, wobei das Innenteil schwenkbar aber im Wesentlichen unverschieblich in Bezug auf das Außenteil angeordnet ist (Kugelfestgelenk).

Alternativ dazu kann ein Verschiebegelenk verwendet werden, bei dem ein Ende der Abtriebswelle fest mit dem Innenteil des Gelenks verbunden ist und das Innenteil des Gelenks verschieblich und schwenkbar in Bezug auf das Außenteil angeordnet ist.

Das Abtriebsrad des Verteilergetriebes kann mittels eines ersten und eines zweiten Lagers in einem Gehäuse des Getriebes gelagert sein. Eine sehr steife Anordnung ergibt sich, wenn das Abtriebsrad zwischen den beiden Lagern angeordnet ist.

Das Verteilergetriebe kann unmittelbar an den Ausgang eines Grundgetriebes angeflanscht sein. Der Ausgang des Grundgetriebes kann über eine erste Gelenkwelle mit einem ersten Achsgetriebe, bei dem es sich z. B. um ein Hinterachsgetriebe handelt, gekoppelt sein. Über das in das Abtriebsrad des Verteilergetriebes integrierte Gelenk und die ais zweite Gelenkwelle fungierende Abtriebswelle kann das Getriebe mit einem zweiten Achsgetriebe, insbesondere mit einem Vorderachsgetriebe gekoppelt sein. Es kann vorgesehen sein, dass sich die zweite Gelenkwelle seitlich am Getriebe vorbei unter einem gewissen Schrägungswinkel in Bezug auf die Längsachse des Fahrzeugs am Getriebe vorbei zum zweiten Achsgetriebe erstreckt. Die zweite Gelenkwelle kann beispielsweise mit einem Winkel zwischen 5° und 15°, insbesondere mit einem Winkel von circa 7° schräg in Bezug auf die Längsrichtung des Fahrzeugs angeordnet sein.

Nach einer Weiterbildung der Erfindung handelt es sich bei dem Abtriebsrad um ein Kettenrad, das über eine Kette von einem Abtriebsrad des Getriebes angetrieben wird. Bei einer derartigen Anordnung können die beiden Gelenkwellen, d. h. die zur Hinterachse und die zur Vorderachse des Fahrzeugs führende Gelenkwelle dieselbe Drehrichtung aufweisen. Prinzipiell wäre aber auch denkbar, dass das Abtriebsrad des Verteilergetriebes über eine Zahnradstufe mit dem Grundgetriebe gekoppelt ist.

Im Folgenden wird die Erfindung im Zusammenhang mit der Zeichnung näher erläutert. Es zeigen:
- Figur 1: ein erstes Ausführungsbeispiel eines Verteilergetriebes gemäß der Erfindung;

- Figur 2: ein zweites Ausführungsbeispiel eines Verteilergetriebes gemäß der Erfindung;
- Figur 3: eine vergrößerte Darstellung des in Figur 1 gezeigten, in das Abtriebsrad eingesetzten Gelenks;
- Figur 4: eine vergrößerte Darstellung des in Figur 2 gezeigten, in das Abtriebsrad eingesetzten Gelenks;
- Figur 5: einen Querschnitt durch das Abtriebsrad und das Gelenk entlang der in Figur 3 gezeigten Schnittlinie B-B;
- Figur 6: eine Variante des in Figur 2 gezeigten Kugelfestgelenks;
- Figur 7: eine Variante des in Figur 1 gezeigten Kugelfestgelenks, die nicht unter der Wortlant von Anspruch 1 fällt;
- Figur 8: eine weitere Variante eines Kugelfestgelenks, die nicht unter der Wortlant von Anspruch 1 fällt;
- Figur 9: eine Variante mit einem Kugelverschiebegelenk und einem geteilten Stützring; und
- Figur 10: eine Variante mit einem Kugelverschiebegelenk und zwei geteilten Stützringen.

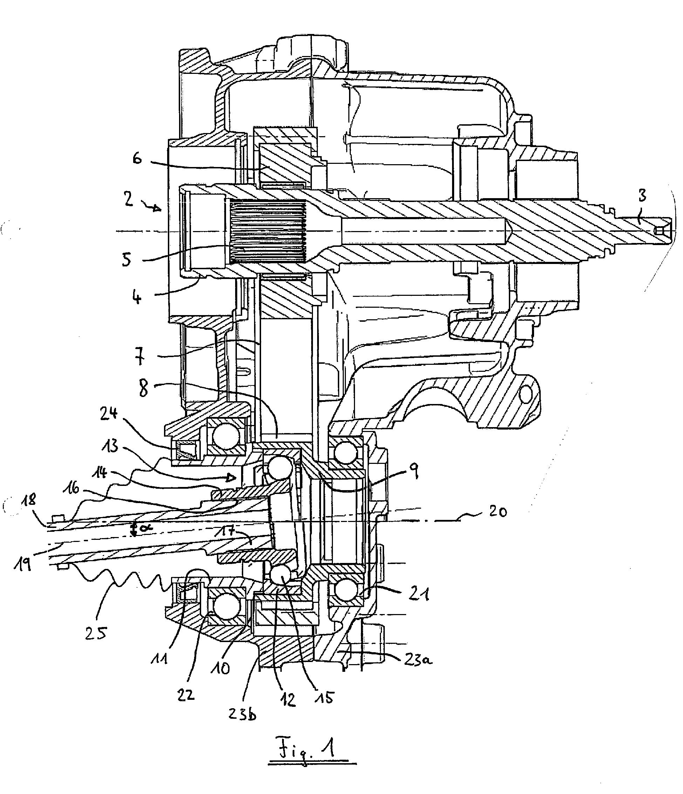

Figur 1 zeigt ein Verteilergetriebe 1, das einen Getriebeeingang 2 und einen ersten, koaxial dazu angeordneten Getriebeausgang 3 aufweist. Der Getriebeeingang 2 weist eine Hohlwelle 4 mit einem Kerbzahnprofil 5 auf, in das eine Getriebeausgangwelle eines Grundgetriebes, z. B. eines Automatikgetriebes oder eines Handschaltgetriebes eingesteckt wird. An den Getriebeausgang 3 schließt sich eine hier nicht näher dargestellte Gelenkwelle an, welche das Grundgetriebe über das Verteilergetriebe 1 mit einem hier nicht näher dargestellten Hinterachsdifferential verbindet. Auf der Eingangswelle 4 ist ein Antriebszahnrad 6 drehbar gelagert, bei dem es sich um ein Kettenrad handelt. Das Kettenrad 6 treibt über eine Kette 7 ein Abtriebszahnrad 8 an. Das Antriebszahnrad 6 wird "mittelbar" von der Eingangswelle 4 angetrieben. "Mittelbar" bedeutet, dass über eine hier nicht dargestellte, sogenannte "DXC-Kupplung" Drehmoment von der Eingangswelle 4 abgezweigt und auf das Antriebszahnrad 6 übertragen werden kann. Die DXC-Kupplung ermöglicht eine variable bzw. bedarfsgerechte Drehmomentabzweigung, wie es z.B. von aktuellen X5 Modellen der Marke BMW bekannt ist.

Das Abtriebszahnrad 8 ist durch eine auf einem ersten Trägerelement 9 vorgesehene Außenverzahnung gebildet. Das erste Trägerelement 9 ist über eine Schweißnaht 10 mit einem zweiten Trägerelement 11 verbunden.

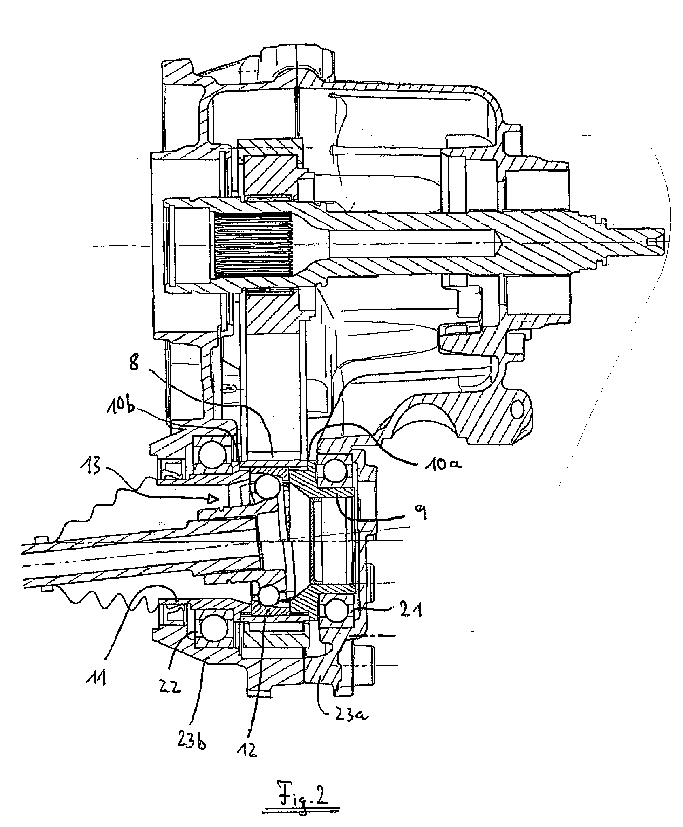

Wie aus Figur 1 ersichtlich ist, wurde vor dem Zusammenschweißen der beiden Trägerelemente 9, 11 in das Trägerelement 9 ein Gleichlaufgelenk, oder genauer gesagt, ein Außenring 12 eines Gleichlaufgelenks 13 eingesetzt, das hier sowie in Figur 2 als Kugelfestgelenk ausgebildet ist. Ein Innenring 14 des Gleichlaufgelenks 13 ist über mehrere in Umfangsrichtung verteilt angeordnete Kugeln 15 schwenkbar aber in Axialrichtung im Wesentlichen fest in dem Außenring 12 gelagert. Der Innenring 14 ist an seiner Innenseite mit einer Längsverzahnung 16 versehen, in die ein Ende 17 einer zu einem hier näher dargestellten Vorderachsdifferential führenden Gelenkwelle 18 eingesetzt ist. Die Gelenkwelle 18 kann sich also in ihrer Längsrichtung 19 verschieben, die, wie aus Figur ersichtlich ist, schräg in Bezug auf eine Längsrichtung 20 des Verteilergetriebes 1 bzw. des Fahrzeugs ist.

Wie aus Figur 1 ersichtlich ist, ist das Element 9 über ein zugeordnetes Kugellager 21 und das Element 11 über ein zugeordnetes Kugellager 22 im Gehäuse 23a, 23b des Verteilergetriebes 1 gelagert. Das Gleichlaufgelenk 13 ist im Bereich zwischen den beiden Lagern 21, 22 angeordnet, wodurch sich eine sehr steife Lagerung ergibt.

Bei der in Figur 1 gezeigten Anordnung, bei der das Gleichlaufgelenk 1 in das Abtriebsrad des Kettentriebs des Verteilergetriebes 1 "integriert" ist, ergibt sich bei vorgegebenem Abstand zwischen dem Verteilergetriebe 1 und einem Vorderachsdifferential ein minimaler Schrägstellungswinkel α der Gelenkwelle 18 in Bezug auf die Längsrichtung 20 des Verteilergetriebes 1. Im übrigen kann die Gelenkwelle 18 sehr nahe seitlich am Grundgetriebe (nicht dargestellt) vorbeigeführt werden, was es ermöglicht, eine Heckantriebsvariante und eine Allradvariante eines Fahrzeugtyps mit einund derselben Bodengruppe bzw. mit ein- und demselben Mitteltunnelblech auszurüsten.

Vollständigkeitshalber sei noch erwähnt, dass das Element 11 über eine Dichtung 24 gegenüber dem Gehäuseteil 23b abgedichtet ist. Ferner ist die Gelenkwelle 18 über eine Balgdichtung 25 gegenüber dem Gehäuseteil 23b abgedichtet.

Figur 2 zeigt ein zweites Ausführungsbeispiel, das sich primär hinsichtlich der konstruktiven Ausgestaltung des Abtriebszahnrads 8 von dem in Figur 1 gezeigten Ausführungsbeispiel unterscheidet. Das Abtriebszahnrad 8 ist hier durch einen Zahnkranz gebildet, in den unmittelbar der Außenring 12 des Gleichlaufgelenks 13 eingesetzt ist. Der Zahnring 8 ist über zwei Schweißnähte 10a, 10b verschweißt und zwar zum einen mit einem rechten Trägerelement 9, welches über das Kugellager 21 im Gehäuseteil 23a gelagert ist und zum anderen über ein Trägerelement 11, welches über das Kugellager 22 im Gehäuseteil 23b gelagert ist.

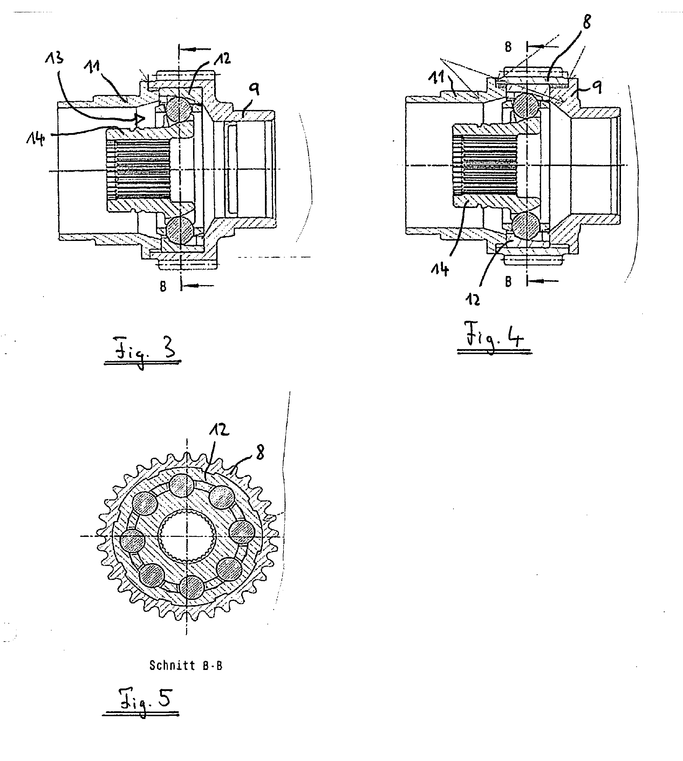

Figur 3 zeigt das Abtriebszahnrad der Figur 1 in vergrößerter Darstellung.

Figur 4 zeig das Abtriebszahnrad der Figur 2 in vergrößerter Darstellung.

Wie aus Figur 5 ersichtlich ist, kann vorgesehen sein, dass der Außenring 12 des Gleichlaufgelenks 13 in Umfangsrichtung betrachtet formschlüssig in den Zahnring 8 (vgl. Figur 2) bzw. in das den Zahnring bildende Element 9 (vgl. Figur 1) eingesetzt ist.

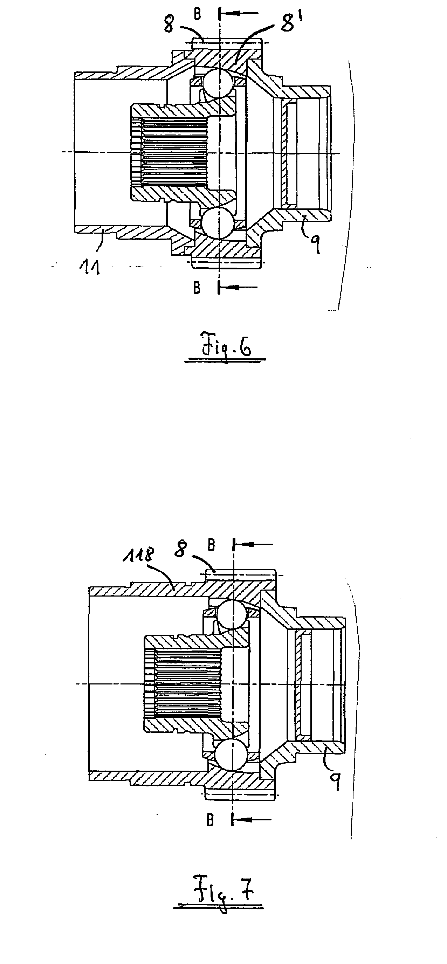

Figur 6 zeigt eine Variante des in Figur 2 gezeigten Kugelfestgelenks. Der Außenring des Kugelfestgelenks und das Abtriebszahnrad 8 sind hier durch ein und dasselbe Bauteil gebildet, das hier mit dem Bezugszeichen 8' bezeichnet ist. Das den Außenring des Kugelfestgelenks und das Zahnrad 8 bildende Bauteil 8' ist analog zum Ausführungsbeispiel der Figur 2 zwischen den beiden Trägerelementen 9, 11 angeordnet und mit diesen verschweißt.

Figur 7 zeigt eine Variante des in Figur 1 gezeigten Kugelfestgelenks, die nicht unter der Wortlant von Anspruch 1 fällt. Hier sind der Außenring des Kugelfestgelenks, das Abtriebszahnrad 8 und das "linke", d.h. das abtriebsseitige Trägerteil durch ein und dasselbe Bauteil gebildet, das hier mit dem Bezugszeichen 118 bezeichnet ist. Das Bauteil 118 ist mit dem rechten Trägerteil 9 verschweißt.

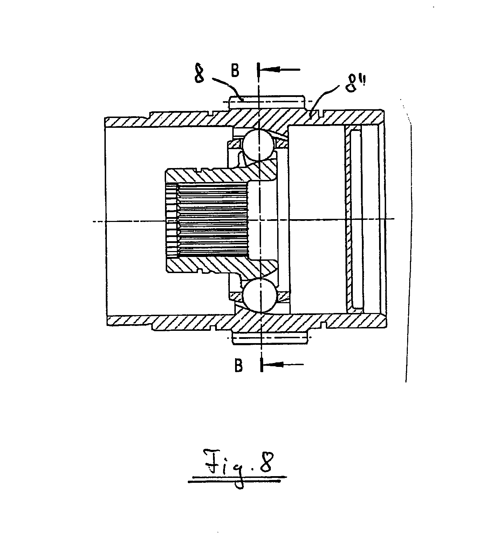

Figur 8 zweigt eine weitere Variante eines Kugelfestgelenks, die nicht unter der Wortlant von Anspruch 1 fällt. Hier sind der Außenring des Kugelfestgelenks, das Abtriebszahnrad 8, das linker Trägerteil und das rechte Trägerteil durch ein einziges Bauteil gebildet, das hier mit dem Bezugszeichen 8" bezeichnet ist.

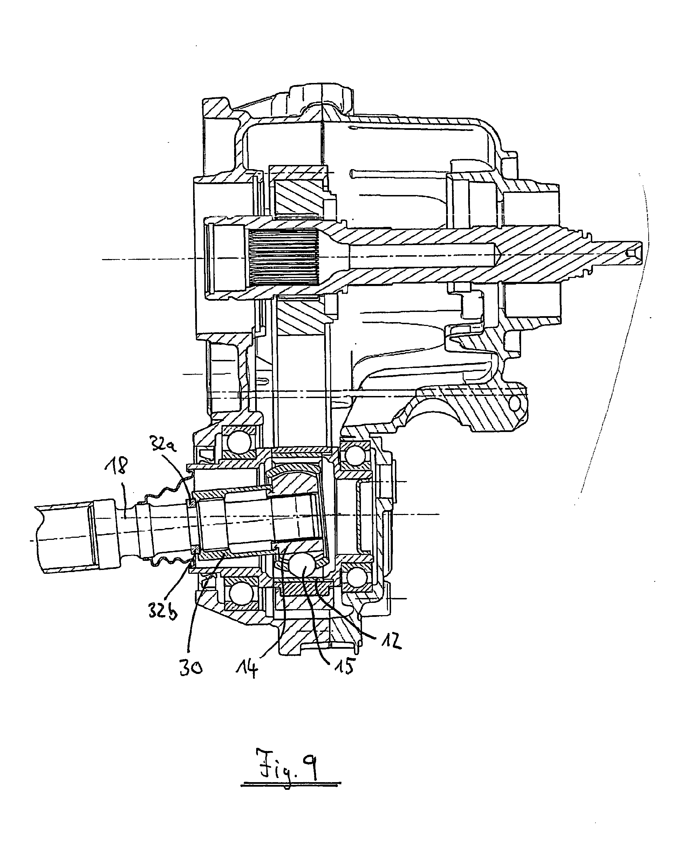

Beim Ausführungsbeispiel der Figur 9 ist anstatt eine Kugelfestgelenks ein Kugelverschiebegelenk vorgesehen, das sich bekanntlich dadurch auszeichnet, dass ein Ende der Abtriebs- bzw. Gelenkwelle 18 fest mit dem Innenring 14 des Kugelverschiebegelenks verbunden ist, wobei der Innenring und die Kugeln verschieblich und schwenkbar in Bezug auf den Außenring 12 angeordnet ist. Wie aus Figur 9 ersichtlich ist, ist der Innenring 14 mittels eine Überwurfmutter 30, welche auf ein Außengewinde 31 der Gelenkwelle 18 aufgeschraubt ist, mit der Gelenkwelle verbunden, Die Überwurfmutter 31 stützt sich dabei an zwei Stützringhälften 32a, 32b ab, welche in eine Eindrehung der Gelenkwelle 18 eingesetzt sind.

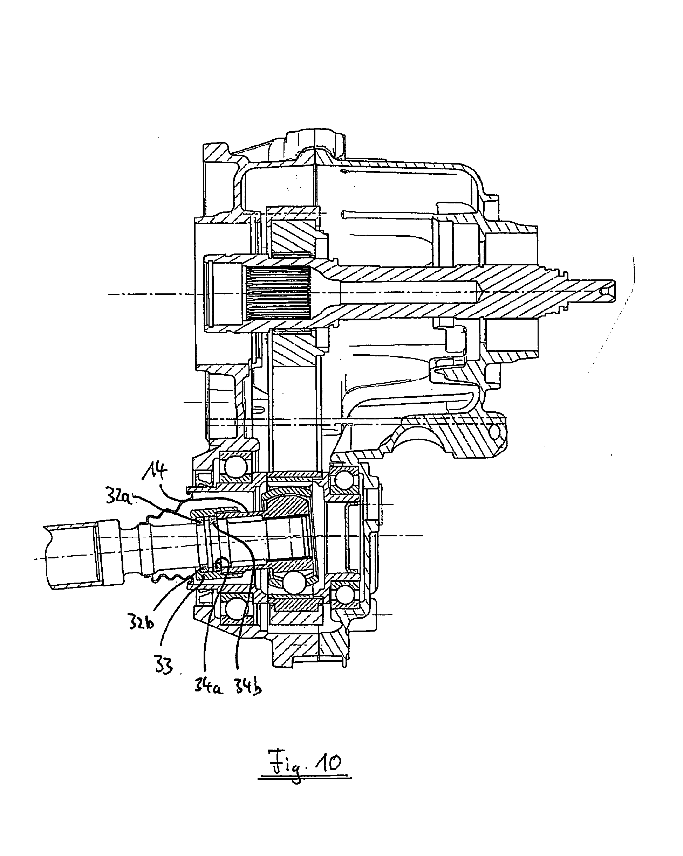

Figur 10 zeigt eine Variante, bei der der Innenring 14 des Kugelverschiebegelenks mittels einer Überwurfmutter 33, welche sich an zwei Stützringhälften 32a, 32b abstützt, und zwei weiteren Stützringhälften 34a, 34b mit der Gelenkwelle 18 verschraubt ist.

## Patentansprüche

1. Getriebe, insbesondere Verteilergetriebe (1), mit einem Abtriebsrad (8), das über ein Gelenk (13) mit einer Abtriebswelle (18) verbunden ist, wobei das Gelenk (13) zumindest teilweise in das Abtriebsrad (8) integriert ist,
**dadurch gekennzeichnet, dass**
das Abtriebsrad (8) zwei Elemente (9, 11) aufweist, zwischen denen ein Außenteil (12) des Gelenks (13) angeordnet ist.

2. Getriebe nach Anspruch 1, **dadurch gekennzeichnet, dass** das Außenteil (12) ein Außenring des Gelenks (13) ist.

3. Getriebe nach Anspruch 2, **dadurch gekennzeichnet, dass** das Außenteil (12) in einer Umfangsrichtung betrachtet formschlüssig in das Abtriebsrad (8) eingesetzt ist.

4. Getriebe nach einem der Ansprüche 1 bis 3, **dadurch gekennzeichnet, dass** ein Ende (17) der Abtriebswelle (18) über eine Längsverzahnung (16) verschieblich in einem Innenteil (14), insbesondere in einem Innenring des Gelenks (13) angeordnet ist, wobei das Innenteil (14) schwenkbar aber im Wesentlichen unverschieblich in Bezug auf das Außenteil (12) angeordnet ist.

5. Getriebe nach einem der Ansprüche 1 bis 3, **dadurch gekennzeichnet, dass** ein Ende (17) der Abtriebswelle (18) fest mit einem Innenteil (14), insbesondere mit einem Innenring des Gelenks (13) verbunden ist, und das Innenteil (14) schwenkbar und verschieblich in Bezug auf das Außenteil (12) angeordnet ist.

6. Getriebe nach einem der Ansprüche 1 bis 5, **dadurch gekennzeichnet, dass** das Abtriebsrad (8) mittels eines ersten und eines zweiten Lagers (21, 22), insbesondere mittels eines ersten und eines zweiten Kugellagers, in einem Gehäuse (23a, 23b) des Getriebes (1) gelagert ist, wobei das Gelenk (13) in einem zwischen den beiden Lagern (21, 22) befindlichen Bereich angeordnet ist.

7. Getriebe nach einem der Ansprüche 1 bis 6, **dadurch gekennzeichnet, dass** das Getriebe einen ersten Getriebeausgang (3) aufweist, der über eine erste Gelenkwelle mit einem ersten Achsgetriebe gekoppelt ist, dass das Getriebe (1) über das Gelenk (13) und die Abtriebswelle (18), welche als zweite Gelenkwelle fungiert, mit einem zweiten Achsgetriebe gekoppelt ist, wobei sich die zweite Gelenkwelle (18) seitlich am Getriebe vorbei in eine der ersten Gelenkwelle im Wesentlichen entgegengesetzte Richtung erstreckt.

8. Getriebe nach Anspruch 7, **dadurch gekennzeichnet, dass** die erste und die zweite Gelenkwelle dieselbe Drehrichtung aufweisen.

9. Getriebe nach einem der Ansprüche 1 bis 8, **dadurch gekennzeichnet, dass** die Abtriebswelle (18) aus dem Gehäuse (23a, 23b) des Getriebes (1) herausgeführt und mittels einer Manschettendichtung (25) bzw. mittels eines Dichtungsbalgs gegenüber dem Innern des Gehäuses (23a, 23b) abgedichtet ist.

10. Getriebe nach einem der Ansprüche 6 bis 9, **dadurch gekennzeichnet, dass** eines der beiden Elemente (9), in dem einen der beiden Lager (21) gelagert ist und eine Außenverzahnung aufweist, und das zweite Element (11) mit dem ersten Element (9) verbunden ist und in dem zweiten Lager (22) gelagert ist.

11. Getriebe nach Anspruch 10, **dadurch gekennzeichnet, dass** das Gelenk (13) in eines der beiden Elemente (9) eingesetzt ist.

12. Getriebe nach Anspruch 10 oder 11, **dadurch gekennzeichnet, dass** die beiden Elemente (9, 11) miteinander verschweißt sind.

13. Getriebe nach einem der Ansprüche 6 bis 9, **dadurch gekennzeichnet, dass** das Abtriebsrad (8) einen Zahnring aufweist, der mit einem der beiden Elemente (9), welches an dem einen der beiden Lager (21) gelagert ist, und mit dem anderen der beiden Element (11), welches an dem zweiten der beiden Lager (22) gelagert ist, verbunden ist.

14. Getriebe nach Anspruch 13, **dadurch gekennzeichnet, dass** der Zahnring mit den beiden Elementen (9, 11) verschweißt ist.

15. Getriebe nach einem der Ansprüche 13 oder 14, **dadurch gekennzeichnet, dass** das Gelenk (13) in den Zahnring eingesetzt ist.

16. Getriebe nach einem der Ansprüche 1 bis 15, **dadurch gekennzeichnet, dass** das Abtriebsrad (8) ein Kettenrad ist, das über eine Kette (7) von einem Antriebsrad (6) des Getriebes (1) angetrieben wird.

17. Getriebe (1) nach einem der Ansprüche 1 bis 16, **dadurch gekennzeichnet, dass** das Gelenk (13) ein Gleichlaufgelenk ist.

## Claims

1. A gearbox, especially a power divider (1), comprising a driven wheel (8) connected by a joint (13) to a driven shaft (18), wherein the joint (13) is at least partly incorporated in the driven wheel (8),
**characterised in that**
the driven wheel (8) has two components (9, 11) between which an outer part (12) of the joint (13) is disposed.

2. A gearbox according to claim 1, **characterised in that** the outer part (12) is an outer ring of the joint (13).

3. A gearbox according to claim 2, **characterised in that** the outer part (12), considered in a peripheral direction, is positively inserted into the driven wheel (8).

4. A gearbox according to any of claims 1 to 3, **characterised in that** an end (17) of the driven shaft (18) is movably disposed, via longitudinal teeth (16), in an inner part (14), especially an inner ring of the joint (13), wherein the inner part (14) is pivotably but substantially non-displaceably disposed relative to the outer part (12).

5. A gearbox according to any of claims 1 to 3, **characterised in that** an end (17) of the driven shaft (18) is permanently connected to an inner part (14), especially to an inner ring of the joint (13), and the inner part (14) is pivotably and displaceably disposed relative to the outer part (12).

6. A gearbox according to any of claims 1 to 5, **characterised in that** the driven wheel (8) is mounted in a casing (23a, 23b) of the gearbox (1) via a first and a second bearing (21, 22), especially via a first and a second ball bearing, wherein the joint (13) is disposed in a region between the two bearings (21, 22).

7. A gearbox according to any of claims 1 to 6, **characterised in that** the gearbox (1) has a first output (3) coupled by a first cardan shaft to a first axle gear, and the gearbox is coupled to a second axle gear via the joint (13) and the driven shaft (18), which serves as a second cardan shaft, wherein the second cardan shaft (18) extends laterally past the gearbox in a direction substantially opposite to that of the first cardan shaft.

8. A gearbox according to claim 7, **characterised in that** the first and the second cardan shafts rotate in the same direction.

9. A gearbox according to any of claims 1 to 8, **characterised in that** the driven shaft (18) extends out of the casing (23a, 23b) of the gearbox (1) and is sealed from the interior of the casing (23a, 23b) by a packing (25) or a bellows.

10. A gearbox according to any of claims 6 to 9, **characterised in that** one of the two components (9) is mounted in one of the two bearings (21) and has external teeth, and the second component (11) is connected to the first component (9) and mounted in the second bearing (22).

11. A gearbox according to claim 10, **characterised in that** the joint (13) is inserted into one of the two elements (9).

12. A gearbox according to claim 10 or claim 11, **characterised in that** the two components (9, 11) are welded together.

13. A gearbox according to any of claims 6 to 9, **characterised in that** the driven wheel (8) has a toothed ring connected to one of the two components (9) mounted on one of the two bearings (21) and to the other of the two components (11) mounted on the second of the two bearings (22).

14. A gearbox according to claim 13, **characterised in that** the toothed ring is welded to the two components (9, 11).

15. A gearbox according to claim 13 or claims 14, **characterised in that** the joint (13) is inserted into the toothed ring.

16. A gearbox according to any of claims 1 to 15, **characterised in that** the driven wheel (8) is a chain wheel driven by a drive wheel (6) of the gearbox (1) via a chain (7).

17. A gearbox (1) according to any of claims 1 to 16, **characterised in that** the joint (13) is a synchronising joint.

## Revendications

1. Transmission, notamment boîte de transfert (1) comportant une roue d'entraînement extérieure (8) reliée par une articulation (13) à l'arbre de sortie (18),
* l'articulation (13) étant intégrée au moins en partie dans la roue de sortie (8),
transmission **caractérisée en ce que**
la roue de sortie (8) comporte deux éléments (9, 11) entre lesquels il y a une partie extérieure (12) de l'articulation (13).

2. Transmission selon la revendication 1,
**caractérisée en ce que**
la partie extérieure (12) est la bague extérieure de l'articulation (13).

3. Transmission selon la revendication 2,
**caractérisée en ce que**
la partie extérieure (12) considérée dans la direction périphérique, est insérée par une liaison par la forme dans la roue de sortie (8).

4. Transmission selon l'une des revendications 1 à 3,
**caractérisée en ce qu**'
une extrémité (17) de l'arbre de sortie (18) est montée par l'intermédiaire d'une denture longitudinale (16), de manière coulissante dans une partie intérieure (14), notamment dans une bague intérieure de l'articulation (13),
* la partie intérieure (14) étant montée de manière pivotante, mais pratiquement non coulissante par rapport à la partie extérieure (12).

5. Transmission selon l'une des revendications 1 à 3,
**caractérisée en ce qu**'
une extrémité (17) de l'arbre de sortie (18), est reliée solidairement à une partie intérieure (14), notamment à la bague intérieure de l'articulation (13), et
* la partie intérieure (14) est montée pivotante et coulissante par rapport à la partie extérieure (12).

6. Transmission selon l'une des revendications 1 à 5,
**caractérisée en ce que**
la roue de sortie (8) est montée dans un boîtier (23a, 23b) de la transmission (1), par l'intermédiaire d'un premier et d'un second palier (21, 22), notamment par l'intermédiaire d'un premier et d'un second palier à billes,
* l'articulation (13) étant prévue dans la zone comprise entre les deux paliers (21, 22).

7. Transmission selon l'une des revendications 1 à 6,
**caractérisée en ce que**
la transmission comporte une première sortie (3) couplée par un premier arbre articulé à une première transmission d'essieu,
* la transmission (1) est couplée à une seconde transmission d'essieu, par l'articulation (13) et l'arbre de sortie (18) fonctionnant comme second arbre articulé,
* le second arbre articulé (18) passant latéralement par rapport à la transmission dans la direction pratiquement opposée à celle du premier arbre articulé.

8. Transmission selon la revendication 7,
**caractérisée en ce que**
le premier et le second arbre articulé tournent dans le même sens de rotation.

9. Transmission selon l'une des revendications 1 à 8,
**caractérisée en ce que**
l'arbre de sortie (18) sort du boîtier (23a, 23b) de la transmission (1) et est rendu étanche par rapport à l'intérieur du boîtier (23a, 23b), par un joint à manchon (25) ou un joint à soufflet.

10. Transmission selon l'une des revendications 6 à 9,
**caractérisée en ce que**
l'un des deux éléments (9) est monté dans l'un des deux paliers (21), et comporte une denture extérieure, et
* le second élément (11) est relié au premier élément (9) et est monté dans le second palier (22).

11. Transmission selon la revendication 10,
**caractérisée en ce que**
l'articulation (13) est logée dans l'un des deux éléments (9).

12. Transmission selon la revendication 10 ou 11,
**caractérisée en ce que**
les deux éléments (9, 11) sont soudés l'un à l'autre.

13. Transmission selon l'une des revendications 6 à 9,
**caractérisée en ce que**
la roue de sortie (8) comporte une couronne dentée reliée à celui des deux éléments (9) qui est monté sur l'un des deux paliers (21), et à l'autre des deux éléments (11) qui est monté sur le second des deux paliers (22).

14. Transmission selon la revendication 13,
**caractérisée en ce que**
la couronne dentée est soudée aux deux éléments (9, 11).

15. Transmission selon l'une des revendications 13 ou 14,
**caractérisée en ce que**
l'articulation (13) est logée dans la couronne dentée.

16. Transmission selon l'une des revendications 1 à 15,
**caractérisée en ce que**
la roue de sortie (8) est une roue à chaîne entraînée par l'intermédiaire d'une chaîne (7) par la roue d'entraînement (6) de la transmission (1).

17. Transmission selon l'une des revendications 1 à 16,
**caractérisée en ce que**
l'articulation (13) est une articulation synchrone.
